# EUROPEAN PATENT SPECIFICATION

(11) **EP 3 877 321 B1**
(45) Date of publication and mention of the grant of the patent: **28.12.2022**
(21) Application number: 19820846.4
(22) Date of filing: 08.11.2019
(51) Int. Cl.: B67D 1/04, B67D 1/08, F16K 1/00

(54) **BAG-IN-KEG CONTAINER WITH VALVE SEALING LIP**
BEUTEL-IN-FASS-BEHÄLTER MIT VENTILDICHTLIPPE
CONTENEUR BAG-IN-KEG AVEC LÈVRE D'ÉTANCHÉITÉ DE LA VALVE

(30) Priority: 09.11.2018 GB 201818331
(43) Date of publication of application: 15.09.2021
(73) Proprietor: Polykeg S.r.l., 24064 Grumello del Monte (BG) (IT)
(72) Inventor: WALTON, Philip Andrew, Durham DL14 7AX (GB); SONZOGNI, Sergio, 24064 Grumello del Monte (BG) Bergamo (IT)
(74) Representative: Craske, Stephen Allan
(86) International application number: PCT/GB2019/053177
(87) International publication number: WO 2020/095068

(56) References cited:
- WO-A1-94/06703
- WO-A1-2005/113416
- WO-A1-2017/025080
- GB-A- 2 481 465

## Description

### TECHNICAL FIELD OF THE INVENTION

This invention relates to bag-in-keg containers, and more particularly, to pressure relief valves for use in such containers.

### BACKGROUND

Kegs, containing carbonated beverages are, due to the nature of carbonated beverages, under internal pressure. This pressure is dependent on the level of carbonation (amount of dissolved CO₂) and the temperature of the beverage. If the CO₂ content and/or temperature of the keg is too high, excessive pressures can be generated within the keg. Furthermore, some beer brewers use a post-fermentation process where fermentation and hence CO₂ generation can continue after initial filling. If this process is not carefully controlled, it is again possible for the internal pressure to become too high. Keg manufacturers sometimes therefore incorporate a pressure relief device which allows gas to vent if the internal pressure rises above a predetermined level, thus preventing excessive over-pressure.

An increasing volume of carbonated beverages is being transported in so-called bag-in-keg containers in which the product is held in a flexible bag within an outer relatively rigid container. Bag-in-keg containers therefore effectively have two containers, one inside the other. Filling and emptying of most beer kegs is carried out by way of a valve closure which is screwed onto the neck of the outer container. Such closures are configured to enable the liquid contents to be dispensed by gas pressure. A gas inlet port allows a dispense gas to be introduced under pressure, which in the case of a bag-in-keg container, enters a space between the inner bag and the outer container. The increased internal pressure causes the liquid product to flow out of a liquid dispensing port via a draw tube which removes liquid from the bottom of the bag. Depending on the type of valve closure, various spring-loaded valve arrangements are provided to sealably close the gas inlet and liquid dispensing ports before the product is dispensed. Various known valve closures are disclosed in WO2005/113416-A1, WO94/06703-A1 and WO2017/025080-A1.

The internal bags are generally of a thin non-structural membrane material and are connected (usually by welding) to the valve closure via a structural adapter. As the surface of the bag is physically constrained by the walls of the outer container, forces generated inside the bag due to the pressure of it's contents are directly transferred to the outer wall of the keg. In this case, a pressure relief valve in the outer keg wall will not relieve the pressure generated within the bag and an over pressure situation will occur.

WO 2015 150 833-A1 discloses a stretch blow moulded keg in which miniature pressure relief valve (PRV) is contained within the wall thickness of the neck to release gases on the occurrence of an over-pressure event. In bag-in-keg containers it is proposed that a bag PRV is mounted in the wall of the structural adapter to vent internal pressure from within the bag into the gas space between the adapter and the neck of the container. A pressure relief valve works due to a pressure difference across it. Therefore, if the additional pressure relief valve is configured to open with a pressure difference of say 5 bar, it will open when the internal bag pressure rises above 5 bar and the pressure between the bag and the keg is 0 bar. However, as this gas vents into the gas space between the bag and the keg, this pressure here will also rise. Thus, the pressure inside the bag at which the neck PRV opens will rise by the same amount. If, for example, the pressure between the bag and the keg is at 3 bar, then the internal bag pressure will need to be 8 bar before the 5 bar pressure differential is achieved.

At this point it is important to note that the pressure required to effectively dispense the carbonated beverage must be higher than the equilibrium pressure of the carbonated beverage otherwise gas will leave the beverage reducing its level of carbonation. Therefore, if the bag PRV is set at 5 bar then the PRV venting the space between the bag and the outer container must be at least 5 bar to maintain carbonation. As already explained, it is the sum of these two pressures that determines the maximum internal pressure, so if for example the bag has a pressure release value of 5 bar and the space between bag and keg also has a pressure release value of 5 bar then the maximum internal pressure is in fact 10 bar (5 + 5 = 10), which is not acceptable.

### SUMMARY OF THE INVENTION

It is proposed to achieve the container PRV by incorporating a flexible lip seal arranged at an angle that will allow it to be opened by a small positive pressure difference between inside and outside. This arrangement therefore provides a container PRV venting the space between the bag and the keg which operates at a significantly lower pressure than that of the bag PRV but which still facilitates an adequately high gas pressure when dispensing.

### BRIEF DESCRIPTION OF THE DRAWINGS

The following description and the accompanying drawings referred to therein are included by way of non-limiting example in order to illustrate how the invention may be put into practice. In the drawings:
Figure 1 is an axial section through an A-type valve closure shown in a closed configuration;
Figure 2 is a similar axial section through the A-type valve closure shown in the dispensing configuration;
Figure 3 is an axial section through a similar valve closure as used in bag-in-keg container;
Figure 4 is a part-sectioned general view of a bag adapter incorporated in the valve closure;
Figure 5 is an axial section through the valve closure showing a detailed section through a bag PRV;
Figure 6 is a similar axial section showing the bag PRV in an open position;
Figure 7 is an axial section through the valve member of the valve closure, incorporating a container PRV;
Figure 8 is a similar section through the valve member showing the container PRV in an open position.

### DETAILED DESCRIPTION OF THE DRAWINGS

For the purpose of example the valve closure shown in the drawings is of the kind known as an A-type valve. All components of the valve closure may be moulded of polymeric materials (plastics) so that the closure is fully recyclable. A preferred form of valve closure is described in EP 2 585 400 A1**.**

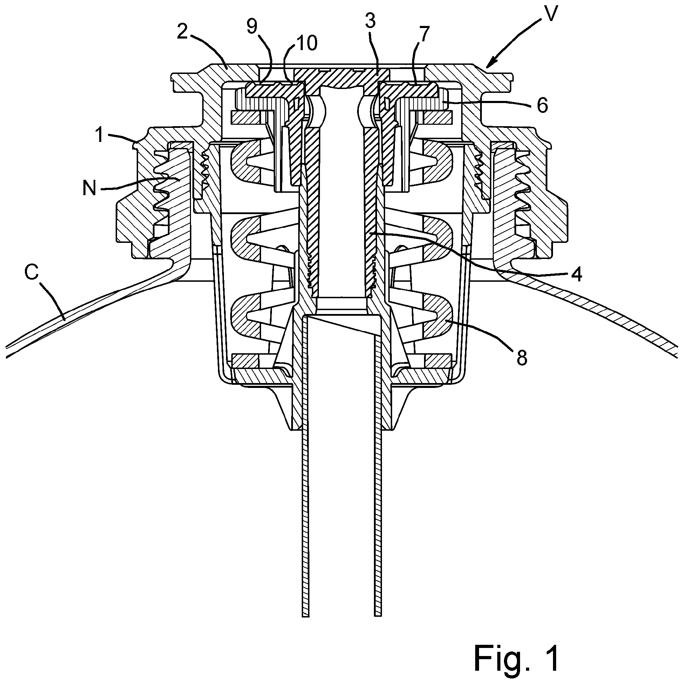

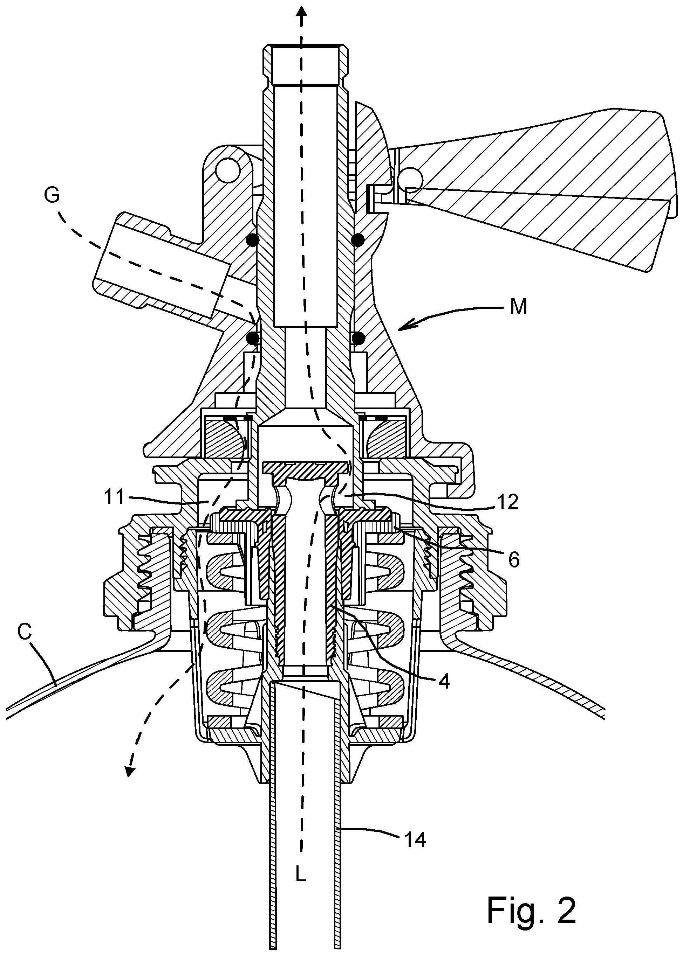

Referring firstly to **Fig. 1****,** the valve closure V comprises a closure body 1 which is adapted to be fitted onto the neck N of a beverage container C such as a beer keg, which is typically formed by stretch blow moulding. The closure body has an annular top wall 2 which is concentric with a fixed disc-shaped cap 3 formed at the upper end of a hollow core pin 4. A valve member 6 includes a resilient seal 7 and is spring-loaded by a compression spring 8 which sealingly urges the valve member against an outer valve seat 9 formed around the inner periphery of the annular top wall 2 and an inner valve seat 10 formed around the periphery of the cap 3. To dispense a liquid product from the container the valve member 6 is engaged by a cylindrical valve-operating member M as in **Fig. 2****.** The valve member 6 is depressed against its spring-loading and makes sealing contact with the valve-operating member M to provide separate gas and liquid flow paths past the valve-operating member, indicated by the broken arrows G and L respectively. Pressurised gas is fed into the container C through a gas inlet port 11. Liquid simultaneously flows out of the container through a draw tube 14 and the core pin 4, exiting through a liquid dispensing port 12. When dispensing is finished and the valve-operating member M is disconnected, the valve member 6 returns to the sealing condition shown in **Fig. 1****,** holding the internal gas pressure within the container together with any remaining liquid.

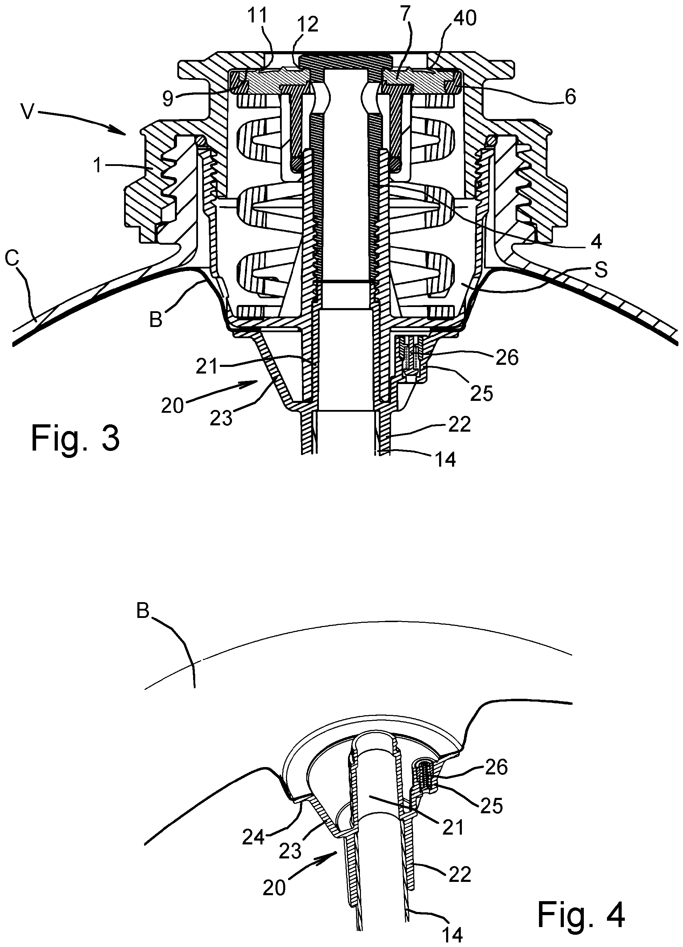

In bag-in-keg containers the carbonated product is held within an inner flexible bag B, as shown in **Fig. 3****.** The bag B is formed of a thin impermeable non-structural membrane which is sealingly connected, e.g. by welding, to an adapter 20. Referring also to **Fig. 4****,** the adapter 20 includes an upper cylindrical portion 21 which is inserted through the bottom of the valve closure to connect with the core pin 4. A lower cylindrical portion 22 connects with the upper end of the draw tube 14. A generally conical connecting wall 23 extends outwards and upwards from the cylindrical portions 21 and 22, ending in an annular flange 24 to which the bag membrane B is sealingly attached. The conical wall 23 incorporates a housing 25 to contain a bag PRV 26 which is arranged to vent gas from within the upper part of bag B into the gas space S between the bag B and the outer container C.

At this point it should be noted that when the flexible bag B is fully pressurised as shown in the drawings there is little or no physical space between the bag and the outer container, but there will still be gas contained within communicating spaces such as between the valve closure V and the neck N. For present purposes such spaces are considered to be part of the space S between the bag and container.

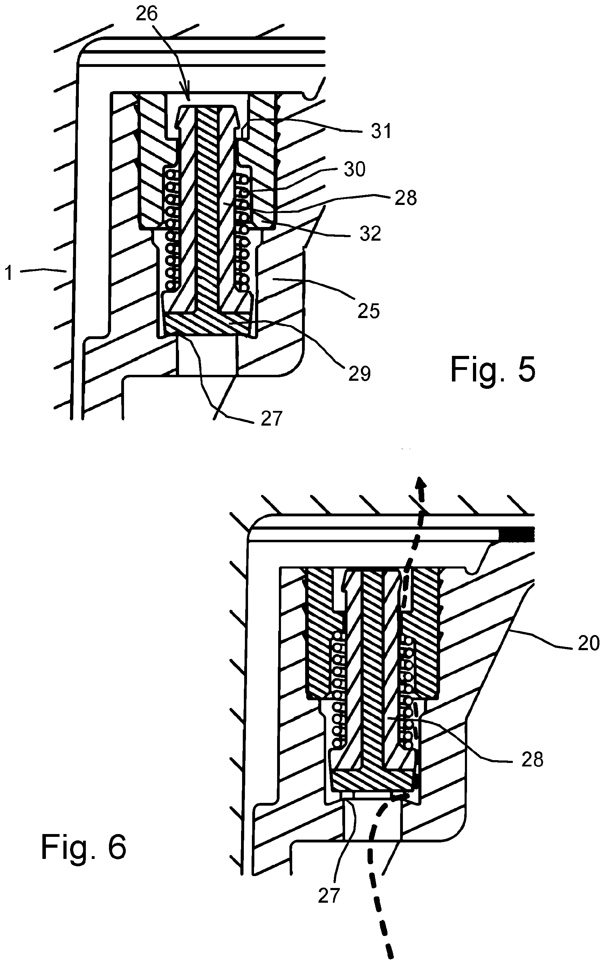

Referring to **Fig. 5****,** the housing 25 for the bag PRV is generally cylindrical, the lower end being stepped inwardly to form a seat 27. A valve plunger 28 incorporating a resilient valve seal 29 is received within the housing 25 and urged into sealing contact with the seat 27 by a compression spring 30. The upper end of the spring 30 bears against a shoulder 31 formed within a retaining ring 32 which is screw-threaded or otherwise engaged within the housing 25. When the internal gas pressure within the bag B exceeds the predetermined set pressure of the bag PRV, e.g. 5 bar, the plunger 28 is lifted off its seat 27, as shown in **Fig. 6****,** allowing gas to pass between the fitting 20 and the closure body 1, venting the excess pressure into the gas space S between the bag B and the outer container C.

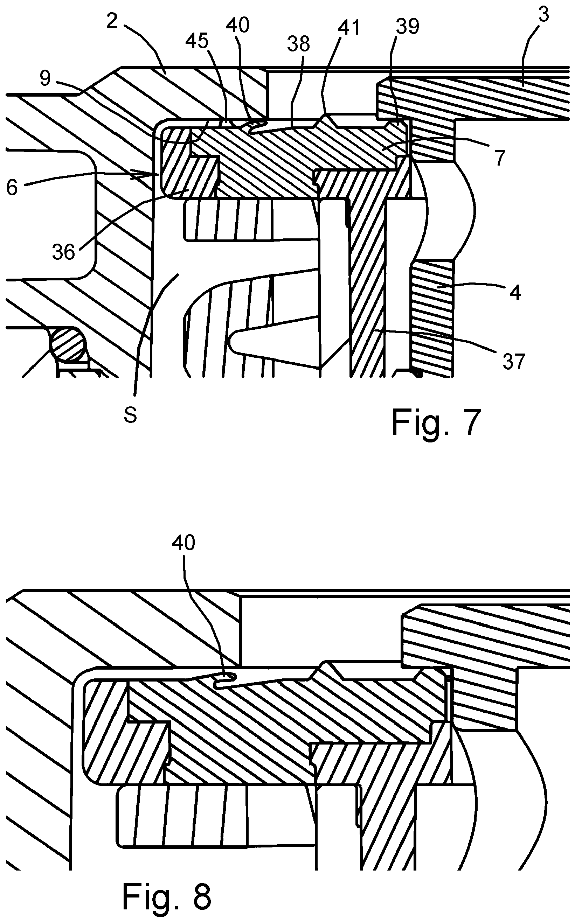

Turning to **Fig. 7****,** the valve member 6 has an annular sealing wall 36 which is integrally formed with an axially-extending cylindrical portion 37 which slides on the core pin 4. The sealing wall 36 has a resilient seal insert 7 which provides an upper sealing face 38, remote from the cylindrical portion 37, which includes an inner sealing bead 39 for sealing contact with the cap 3 and an outer flexible lip seal 40 for sealing contact with the valve seat 9 provided by annular wall 2. Between the two seals 39 and 40 there is a further sealing bead 41 which sealingly engages valve-operating member M during dispensing from the keg. The sealing beads 39 and 41 are of conventional V-shaped cross section to make sealing contact with the opposing surface with little or no distortion due to any differential gas pressures which might exist on opposite sides of the bead. In contrast, the outer lip seal 40 is asymmetric, being set at an angle to the opposing face of the top wall 2, and directed inwardly towards the sealing beads 39 and 41. When the external pressure is at or above the internal pressure within the dispensing gas space S between the bag B and the outer container C the lip seal presses against the valve seat provided by the top wall 2 ensuring that the internal space is sealed. However, if the internal pressure rises significantly above a relatively low opening pressure (typically between 0 and 0.5 bar) the small positive pressure differential will cause distortion of the seal as shown in **Fig. 8****,** allowing the internal pressure to be released. The lip seal 40 therefore acts as a PRV with a remarkably low operating pressure. This lip seal will typically vent pressure at about 5% of the bag PRV relief pressure so that a bag with say a 5 bar release pressure would have a container PRV relief pressure of about 0.25 bar. Thus the maximum internal pressure of the keg would not be significantly higher than that of the bag itself, i.e. 5 + 0.25 = 5.25 bar.

It is important to note that this container PRV can only operate when the keg is not coupled to the dispensing apparatus and the gas inlet port is closed, thus providing the required level of over-pressure protection when not coupled to the dispensing apparatus. However, when the keg is connected to the dispensing apparatus by a dispensing coupler M, the flexible sealing ring 40 is held clear of the sealing surface of the annular wall 2 and the usual dispensing pressure, typically above 5 bar, can be introduced to the space between the bag and the keg through the dispensing flow path G. When the coupler is removed, the sealing ring 40 is re-engaged and any excessive internal pressure can again be vented.

It may be desirable to vent the excess pressure from the internal gas space at a relatively slow rate. Therefore, as can be seen in **Fig. 7****,** a third sealing bead 45 may be incorporated parallel and in close proximity to the flexible lip seal 40. This third sealing bead is arranged to close with a gas tight seal save for a small circumferential gap that allows the gas to escape at a specific controlled rate, thereby allowing the rate of pressure loss to be limited.

The bag PRV described herein is mounted in the wall of the bag adapter 20. However it could be mounted anywhere in the effective wall of the bag provided the PRV outlet is positioned to access the space S between the bag and the keg.

The venting mechanism can be applied to the dispensing gas valve in all the common valve formats A, G, S, D and M types. An A-type valve is similar to a G-type valve. Both have a fixed central core pin and a single spring-loaded valve member which controls two ports. Other forms of valve closure are also used with beer kegs. Operationally, S, D and M types are similar to each other in that they all have no fixed central core pin but have two concentric spring-loaded moving valve members which separately control the two ports. Generally the valve members are operated by respective spring elements, but the valve members may be cascaded such that closure of one spring-loaded valve member causes closure of the other.

Whilst the above description places emphasis on the areas which are believed to be new and addresses specific problems which have been identified, it is intended that the features disclosed herein may be used in any combination which is capable of providing a new and useful advance in the art.

## Claims

1. A bag-in-keg container:
- a container body (C);
- a flexible bag (B) within the container body;
- a valve closure (V) attached to the container body:
- a closure body (1)
- a gas inlet port (11),
- a liquid dispensing port (12),
- valve means (6) to sealably close the gas inlet and liquid dispensing ports, said valve means including a resilient seal member (7),
- a valve seat (9) which co-operates with the resilient seal member (7) to form said gas inlet port (11);
- an adapter (20) sealingly attached to the flexible bag (B) and connected to the valve closure (V);
- a bag pressure release valve (26) to vent gas pressure from within the flexible bag;
- a container pressure release valve (40) to vent gas pressure from between the container body (C) and the flexible bag (B);
***characterised in that*** the container pressure release valve comprises a flexible lip seal (40) which is formed on the resilient seal member (7) and which co-operates with the valve seat (9).

2. A bag-in-keg container according to Claim 1 wherein the flexible lip seal is angularly disposed relative to the valve seat (9).

3. A bag-in-keg container according to Claim 1 wherein the bag pressure release valve (26) is mounted in the adapter (20).

4. A bag-in-keg container according to Claim 1 wherein the seal member (7) includes a further seal (45) which co-operates with the valve seat (9), and said further seal incorporates a bypass opening which allows gas to escape at a controlled rate.

## Patentansprüche

1. Ein Beutel-im-Fass-Behälter:
- einen Behälterkörper (C);
- eine flexiblen Beutel (B) innerhalb des Behälterkörpers;
- einen am Behälterkörper angebrachten Ventilverschluss (V):
- einen Verschlusskörper (1)
- eine Gaseinlassöffnung (11),
- eine Flüssigkeitsabgabeöffnung (12),
- Ventilmittel (6) zum abdichtenden Verschließen der Gaseinlass- und Flüssigkeitsabgabeöffnungen, wobei die Ventilmittel ein elastisches Dichtungselement (7) enthalten,
- einen Ventilsitz (9), der mit dem elastischen Dichtungselement (7) zusammenwirkt, um die Gaseinlaßöffnung (11) zu bilden;
- einen Adapter (20), der abdichtend an dem flexiblen Beutel (B) angebracht und mit dem Ventilverschluss (V) verbunden ist;
- ein Beutel-Druckentlastungsventil (26), um den Gasdruck aus dem Inneren des flexiblen Beutels abzulassen;
- ein Behälter-Druckentlastungsventil (40), um den Gasdruck zwischen dem Behälterkörper (C) und dem flexiblen Beutel (B) abzulassen;
**dadurch gekennzeichnet, dass** das Druckentlastungsventil des Behälters eine flexible Lippendichtung (40) umfasst, die an dem elastischen Dichtungselement (7) ausgebildet ist und mit dem Ventilsitz (9) zusammenwirkt.

2. Ein Beutel-im-Fass-Behälter nach Anspruch 1, bei dem die flexible Lippendichtung in einem Winkel relativ zum Ventilsitz (9) angeordnet ist.

3. Ein Beutel-im-Fass-Behälter nach Anspruch 1, wobei das Bag-Druckentlastungsventil (26) in dem Adapter (20) angebracht ist.

4. Ein Beutel-im-Fass-Behälter nach Anspruch 1, bei dem das Dichtungselement (7) eine weitere Dichtung (45) enthält, die mit dem Ventilsitz (9) zusammenwirkt, und die weitere Dichtung eine Bypass-Öffnung enthält, die Gas zuläßt kontrolliert zu entkommen.

## Revendications

1. Un conteneur sac-en-fût:
- un corps de récipient (C) ;
- une poche souple (B) à l'intérieur du corps du conteneur ;
- un obturateur à vanne (V) fixé sur le corps du récipient :
- un corps de fermeture (1)
- un orifice d'admission de gaz (11),
- un orifice de distribution de liquide (12),
- des moyens de soupape (6) pour fermer de manière étanche les orifices d'admission de gaz et de distribution de liquide, lesdits moyens de soupape comprenant un élément d'étanchéité élastique (7),
- un siège de soupape (9) qui coopère avec l'élément d'étanchéité élastique (7) pour former ledit orifice d'entrée de gaz (11);
- un adaptateur (20) fixé de manière étanche à la poche souple (B) et relié à la obturateur à vanne (V);
- une soupape de décharge de pression de sac (26) pour évacuer la pression de gaz de l'intérieur du sac flexible;
- une soupape de décharge de pression de conteneur (40) pour évacuer la pression de gaz entre le corps de conteneur (C) et le sac flexible (B);
**caractérisé en ce que** la soupape de décharge de pression du récipient comprend un joint à lèvre flexible (40) qui est formé sur l'élément d'étanchéité élastique (7) et qui coopère avec le siège de soupape (9).

2. Un conteneur sac-en-fût selon la revendication 1, dans lequel le joint à lèvre flexible est disposé angulairement par rapport au siège de soupape (9).

3. Un conteneur sac-en-fût selon la revendication 1, dans lequel la soupape de libération de la pression du sac (26) est montée dans l'adaptateur (20).

4. Un conteneur sac-en-fût selon la revendication 1, dans lequel l'élément d'étanchéité (7) comprend un autre joint (45) qui coopère avec le siège de soupape (9), et ledit autre joint incorpore une ouverture de dérivation qui permet au gaz s'échapper à un rythme contrôlé.s'échapper à un rythme contrôlé.
